# FASCICULE DE BREVET EUROPEEN

(11) **EP 1 911 157 B1**
(45) Date de publication et mention de la délivrance du brevet: **22.05.2013**
(21) Numéro de dépôt: 06778051.0
(22) Date de dépôt: 28.07.2006
(51) Int. Cl.: H03H 9/17, B60C 23/04

(54) **STRUCTURE RESONANTE HYBRIDE POUR VERIFIER DES PARAMETRES D'UN PNEUMATIQUE**
HYBRIDE RESONANTE STRUKTUR ZUM VERIFIZIEREN VON PARAMETERN EINES REIFENS
HYBRID RESONANT STRUCTURE FOR VERIFYING PARAMETERS OF A TYRE

(30) Priorité: 29.07.2005 FR 0552396
(43) Date de publication de la demande: 16.04.2008
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: FAGOT-REVURAT, Lionel, F-63260 Ussel de Vensat (FR); BALLANDRAS, Sylvain, F-25000 Besançon (FR); MASSON, Jérémy, F-25720 Avanne-Aveney (FR); STEICHEN, William, F-06330 Rocquefort Les Pins (FR)
(74) Mandataire: Dequire, Philippe Jean-Marie Denis
(86) Numéro de dépôt international: PCT/EP2006/064784
(87) Numéro de publication internationale: WO 2007/012668

(56) Documents cités:
- EP-A- 0 937 615
- EP-A- 1 120 910
- EP-A2- 1 047 189
- WO-A1-2004/055982
- DE-A1- 10 316 716
- US-A- 4 456 850
- US-A1- 2004 239 504
- US-A1- 2005 093 688
- US-B1- 6 548 942
- BERNHARD JAKOBY ET AL: "The Potential of Microacoustic SAW- and BAW-Based Sensors for Automotive Applications-A Review" IEEE SENSORS JOURNAL, IEEE SERVICE CENTER, NEW YORK, NY, US, vol. 2, no. 5, octobre 2002 (2002-10), XP011065685 ISSN: 1530-437X
- BENES ET AL: "Comparison between BAW and SAW sensor principles" IEEE Transactions on Ultrasonics, Ferroelectrics and Frequency Control IEEE USA, vol. 45, no. 5, septembre 1998 (1998-09), pages 1314-1330, XP002424851 Stevenage, GB ISSN: 0885-3010
- MANSFELD G D ET AL: "The development of a new class of BAW microwave acoustic devices for ecological monitoring", 2002 IEEE ULTRASONICS SYMPOSIUM PROCEEDINGS. MUENCHEN, GERMANY, OCT. 8 20021011; 20021008 - 20021011 NEW YORK, NY : IEEE, US, vol. 1, 11 October 2002 (2002-10-11), pages 909-912, XP002473285, DOI: DOI:10.1109/ULTSYM.2002.1193544 ISBN: 978-0-7803-7582-6
- MANSFELD G D ET AL: "Theory and numerical analysis of bulk acoustic wave multilayer composite resonator structure", ULTRASONICS SYMPOSIUM, 1997. PROCEEDINGS., 1997 IEEE TORONTO, ONT., CANADA 5-8 OCT. 1997, NEW YORK, NY, USA,IEEE, US, vol. 2, 5 October 1997 (1997-10-05), pages 891-894, XP010271495, DOI: 10.1109/ULTSYM.1997.661724 ISBN: 978-0-7803-4153-1

## Description

### DOMAINE TECHNIQUE

L'invention appartient au domaine de la mesure à distance d'une grandeur physique, par l'intermédiaire notamment d'une liaison radiofréquence et d'un composant passif, d'un pneumatique lors du roulage d'un véhicule.

Plus particulièrement, l'invention concerne des structures résonantes à ondes de volume au sein de films piézoélectriques qui sont adaptées pour cette utilisation contraignante. La structure hybride selon l'invention peut être optimisée pour augmenter son facteur de qualité et son coefficient de couplage dans sa gamme de fréquence.

L'invention se rapporte également à l'utilisation de résonateurs hybrides dans une liaison au sol d'un véhicule, par exemple au niveau du pneumatique, pour mesurer à distance et sans fil des paramètres du roulage comme la température des gommes d'un pneumatique ou la pression de l'air interne. L'invention a également trait à l'utilisation de structures résonantes pour transformer des microsystèmes électromécaniques, ou MEMS, actifs en MEMS passifs, c'est-à-dire interrogeables à distance et non connectés à une source d'alimentation.

### ÉTAT DE LA TECHNIQUE ANTÉRIEURE

Pour augmenter la sécurité automobile, il apparaît souhaitable d'intégrer des systèmes de surveillance en temps réel des performances des pneumatiques et/ou de leurs conditions d'utilisation. A cette fin, une voie d'instrumentation des pneumatiques vise à y intégrer des dispositifs électroniques, tels que des capteurs, afin d'assurer par exemple le suivi de paramètres relatifs à l'utilisation et/ou l'usure des pneumatiques. Par exemple, les systèmes TPMS commercialisés (« *Tire Pressure Monitoring System* »), en règle générale des capteurs intégrés dans les valves des pneumatiques, permettent d'informer le conducteur si la pression de ses pneus est correcte et de détecter des fuites.

Dès lors que la mesure d'un paramètre physique d'un pneumatique monté sur sa roue et en conditions de roulage est envisagée, se pose le problème de l'énergie disponible pour pouvoir faire la mesure et la transmettre à un système de contrôle, à l'intérieur ou hors du véhicule : les dispositifs électroniques doivent également comporter des moyens pour alimenter les capteurs et récupérer les signaux, voire les traiter. Les solutions actuelles, utilisées pour la majorité des systèmes TPMS actuellement déployés, reposent sur l'utilisation de piles associée à des stratégies de gestion de l'énergie permettant de ne pas les changer pendant toute la durée de vie des pneumatiques.

Cependant, la solution idéale concerne des capteurs passifs, c'est-à-dire ne nécessitant pas de source d'énergie embarquée sur l'ensemble pneumatique /roue, mais alimentés par une onde radiofréquence à distance ou par un système d'auto génération de l'énergie associée au pneumatique. Dans le cas d'une alimentation par une onde radiofréquence, un signal d'interrogation est envoyé au capteur équipé d'une antenne ; suite à la réception du signal, le capteur émet une onde radio qui contient l'information sur le paramètre physique auquel il est directement ou indirectement sensible.

Il est ainsi connu, par exemple du document EP 0 937 615, d'utiliser des capteurs à ondes de surface, ou SAW (« *Surface Acoustic Wave* »), pour mesurer des paramètres physiques, comme l'adhérence, du pneu de façon passive par ondes radiofréquence ; cette solution de capteurs SAW a été développée, en particulier en ce qui concerne la transmission de données (US 2005/093688).

Les capteurs SAW peuvent être du type « ligne à retard » (la différence de phase entre plusieurs échos générés par le capteur dépendra du paramètre à mesurer) ou du type « résonateur » (la fréquence de résonance du capteur dépendra du paramètre à mesurer). Les capteurs de type « résonateur », du fait de leur plus faible encombrement, sont généralement plus adaptés à la mesure d'un paramètre physique du pneumatique dès lors que l'accès à ce paramètre nécessite l'intégration du capteur pendant la fabrication du pneumatique.

Cependant, une mesure performante par un capteur du type résonateur nécessite une qualité de résonance importante pour une précision optimale de détection de sa fréquence de résonance, des pertes d'insertion dans le résonateur les plus faibles possibles (pour optimiser l'utilisation de l'énergie envoyée par l'onde radio d'interrogation, le système étant passif), et une sensibilité au paramètre physique à mesurer suffisante pour l'application envisagée. Pour optimiser ces trois critères de performance sans augmenter l'encombrement final du capteur, le résonateur SAW peut trouver des limites pour les applications envisagées : en effet, les résonateurs SAW ayant des pertes d'insertion minimales, et donc un couplage maximal (10 % au lieu de 1 % en jouant sur le matériau piézoélectrique du support par exemple) atteignent des facteurs de qualité de résonance insuffisants.

Par ailleurs, les résonateurs SAW peuvent avoir une sensibilité au paramètre physique à mesurer, notamment la température, beaucoup trop importante pour garantir le respect des normes (FCC ou ETSI) d'émission radio, notamment dans la bande ISM des 433, 92 MHz : la grande sensibilité thermique entraîne ainsi les résonances à sortir des bandes de fréquence autorisées. Enfin, de telles structures résonantes à ondes de surface impliquent un encombrement certain, lié à la longueur d'onde acoustique et à leur configuration même, qui réclame une longueur minimum pour réaliser leur fonction spectrale : un capteur usuel fait environ 5 mm x 5 mm.

Une alternative envisagée pourrait être l'utilisation de résonateurs à ondes de volumes, basés sur la mise en vibration d'une lame d'un matériau piézoélectrique, dans lesquels deux électrodes en regard enserrent une plaque de matériau piézoélectrique ; l'application d'un champ radiofréquence aux bornes du dipôle ainsi constitué engendre, par effet piézoélectrique inverse, une déformation de la plaque selon les couplages permis par l'orientation cristalline de son matériau constitutif.

Le quartz s'est révélé le matériau privilégié de ce type d'applications compte tenu de ses propriétés thermo-élastiques (coefficients de qualité mécanique élevés, existence d'orientations compensées des effets de température, etc.). Le fonctionnement d'un tel résonateur usuel est de l'ordre du MHz, ce qui est trop faible pour une détection radiofréquence optimale ; pour gagner en fréquence, il devient nécessaire d'amincir les matériaux massifs usuels jusqu'à des épaisseurs rendant toute application industrielle (où l'épaisseur minimum des plaques est de l'ordre de 30 µm) hasardeuse : une fréquence de 1 GHz représente la limite pratique de mise en oeuvre des résonateurs classiques à ondes de volume.

Ces oscillateurs de volume BAW ne peuvent en pratique pas être utilisés, notamment dans le domaine de la mesure de paramètres de roulage dans un environnement contraignant : aucune alternative aux capteurs SAW n'a encore été commercialisée.

La demande de brevet US 2005/093688 montre un élément de liaison au sol d'un véhicule comportant en tant que capteur une structure résonante acoustique de volume hybride dont la composition n'est pas révélée.

Un capteur de pression à base d'un résonateur HBAR est connu du document par MANSFELD G D et al: "The development of a new class of BAW microwave acoustic devices for ecological monitoring", 2002 IEEE ULTRASONICS SYMPOSIUM PROCEEDINGS. MUENCHEN, GERMANY, octobre 2002 (2002-10-11), pages 909-912, DOI:10.1109/ULTSYM.2002.1193544.

### EXPOSÉ DE L'INVENTION

L'invention se propose, parmi autres avantages, de pallier les inconvénients des capteurs existants et de fournir un résonateur du type à ondes de volume adapté à la mesure de paramètres de roulage, en particulier d'un pneumatique, dans une liaison au sol d'un véhicule.

L'option envisagée permet ainsi une optimisation simultanée des paramètres décrits ci-dessus : perte d'insertion, qualité de résonance, sensibilité, et encombrement.

En particulier, l'invention se rapporte à un résonateur permettant de mesurer les paramètres en conditions contraignantes de vibration et température. Le résonateur selon l'invention est une structure résonante hybride, qui possède un fort niveau de couplage, et permet de surmonter simultanément les difficultés rencontrées à haute fréquence avec la solution à ondes de volume, l'impossibilité de travailler en basse fréquence sur des structures FBAR simples, et l'absence d'un niveau de couplage suffisant lorsque l'on travaille sur des structures composites.

Plus précisement l'invention concerne un élément de liaison au sol tel que défini dans la revendication 1.

Sous un de ses aspects, la structure résonante acoustique hybride adaptée pour être utilisée comme capteur d'un paramètre de roulage d'un élément de liaison au sol, comprend un transducteur piézoélectrique qui comprend deux électrodes entourant une couche de matériau piézoélectrique sous forme de film mince. L'une des deux électrodes est mise en place sur un support, et l'autre est revêtue d'une couche additionnelle dont l'épaisseur est déterminée en fonction de l'épaisseur du substrat et des paramètres de fonctionnement du résonateur, pour optimiser la densité acousto-électrique au sein du film piézoélectrique. Les épaisseurs déterminent une fréquence propre du résonateur, dont une harmonique est dans la gamme radiofréquence ciblée, c'est-à-dire de préférence entre 300 MHz et 3 GHz.

Le support peut être un substrat, avantageusement sous forme de lame, avec le miroir de Bragg positionné sur le substrat ; la couche additionnelle est recouvert par un miroir de Bragg. La structure résonante selon l'invention peut avantageusement être enrobée, entièrement ou partiellement, dans une couche de protection, qui peut servir d'encapsulation, notamment en utilisant les procédés d'enrobage sélectifs standards permettant de réaliser un « packaging », ou mise sous boîtier, d'un composant électronique « à faible coût » ; au moins un miroir de Bragg est choisi pour que son coefficient de réflexion soit maximal au voisinage de la fréquence de résonance de la structure.

Le substrat peut être constitué de plusieurs matériaux qui, avantageusement, possèdent des facteurs de qualité mécanique et diélectrique tels que le produit QF de la structure résonante dépasse 3 ou 5 × 10¹² ; il peut s'agir aussi d'un silicium monocristallin. La couche piézoélectrique est avantageusement composée de nitrure d'aluminium, qui peut être déposée par pulvérisation cathodique par exemple, ou d'un monocristal qui peut être rapporté par collage moléculaire suivi d'un amincissement. Les électrodes sont avantageusement des couches métalliques déposées ou intégrées sur leur support, à savoir miroir de Bragg ou couche piézoélectrique. La couche additionnelle peut être piézoélectrique ou non ; de préférence, elle est mise en place par croissance épitaxiale d'un matériau monocristallin, mais elle peut également comprendre un matériau comme celui utilisé pour le substrat.

La structure selon l'invention est un élément d'une liaison au sol d'un véhicule automobile. Selon un mode de réalisation préféré, elle est intégrée dans la gomme d'un pneumatique au cours de sa fabrication.

Selon un mode de réalisation particulièrement préféré, la structure selon l'invention est couplée à une antenne radiofréquence afin de réaliser une fonction de transpondeur. Un tel transpondeur peut être associé à une ou plusieurs autres structures résonantes hybrides pour effectuer des mesures différentielles, en particulier de la température.

Selon un autre aspect, l'invention concerne l'utilisation de l'élément de liaison au sol comportant la structure résonnante hybride tel que revendiqué, c'est-à-dire un résonateur à ondes de volume et à film piézoélectrique, et non un usuel résonateur SAW, pour mesurer un paramètre de roulage d'un véhicule, notamment la température, ou pour servir de jauge de contrainte dans un MEMS sensible à un paramètre de roulage d'un véhicule, notamment la pression.

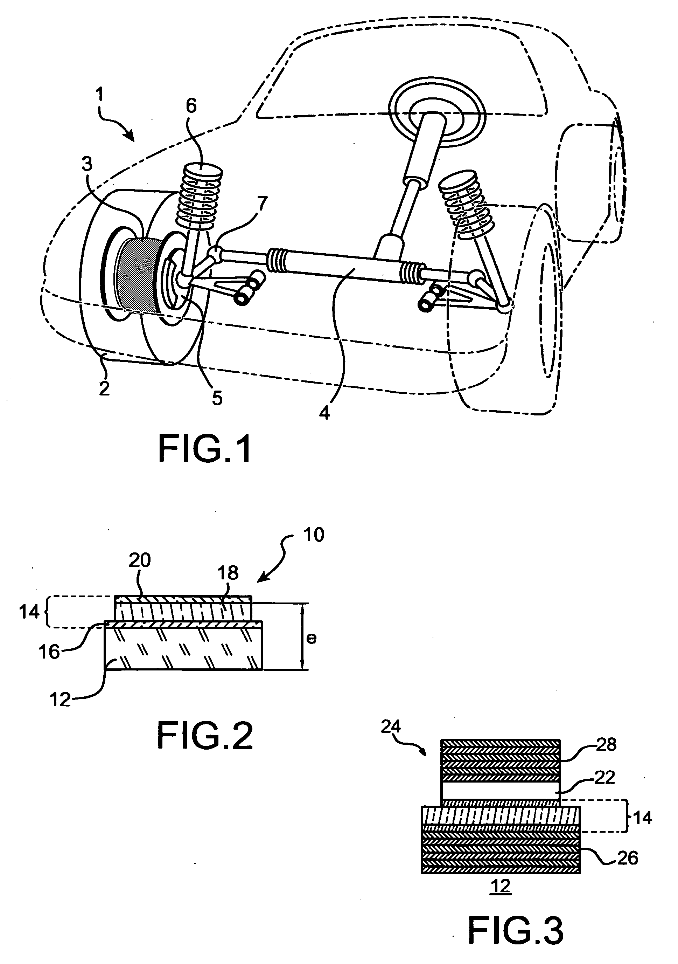

Signalons à toutes fins utiles que, dans le contexte de la présente invention, le terme « pneumatique » désigne aussi bien un pneumatique gonflable qu'un bandage élastique ou une chenille, tous ces termes devant être interprétés comme équivalents ; la « liaison au sol » 1 d'un véhicule regroupe le pneumatique 2 tel que défini ci-dessus, ainsi que les éléments qui en font partie tels que les inserts 3, et tous les composants qui le relient au châssis 4 du véhicule, à savoir notamment la roue, la jante, le système de freinage 5, le système d'amortissement 6, l'essieu,... jusqu'à l'articulation 7 tel qu'illustré sur la figure 1.

### BRÈVE DESCRIPTION DES DESSINS

D'autres caractéristiques et avantages de l'invention ressortiront plus clairement à la lecture de la description suivante et en référence aux dessins annexés, donnés à titre uniquement illustratif et nullement limitatifs.
La figure 1, déjà décrite, représente schématiquement une liaison au sol d'un véhicule et différentes localisations de capteurs.
La figure 2 montre un résonateur hybride qui n'est pas revendiqué.
La figure 3 illustre un résonateur hybride avec miroir de Bragg et couche additionnelle selon un mode préféré de réalisation de l'invention.
La figure 4 montre un transpondeur.
La figure 5 représente une autre utilisation d'un résonateur selon l'invention dans un MEMS.

### EXPOSÉ DÉTAILLÉ DE MODES DE RÉALISATION PARTICULIERS

Lors du roulage, la température des pneumatiques est un facteur de sécurité important. Il apparaît ainsi souhaitable de pouvoir la contrôler régulièrement par une mesure directe, afin d'avertir le conducteur lorsque les pneumatiques sont à une température inadéquate pour une adhérence optimale, ou pour optimiser leur durée de vie. A cette fin, il est souhaitable qu'un capteur passif, ainsi que son système de transmission de données, c'est-à-dire dans le cas usuel son antenne propre à établir une liaison radiofréquence avec le dispositif d'interrogation du véhicule, soit intégré directement dans le pneumatique au cours de sa fabrication. Le capteur doit alors être le moins intrusif possible, l'instrumentation d'un pneumatique restant un accessoire, et la fonction principale de l'ensemble obtenu demeurant d'assurer les meilleures conditions de roulage : il est important que les différents dispositifs intégrés au pneumatique n'altèrent ni ses performances mécaniques, ni sa durabilité. Une des surfaces d'un capteur SAW devant rester libre, des contraintes supplémentaires sur la mise en boîtier apparaissent pour une telle intégration, ce qui augmente en outre encore leur taille.

Grâce à la possibilité de réaliser des couches minces piézoélectriques sur des substrats non piézoélectriques, il est apparu possible d'exciter, au sein de films piézoélectriques, des ondes de volume, souvent à polarisation longitudinale, présentant simultanément de très hautes vitesses de propagation et un couplage piézoélectrique élevé (quelques %). Ainsi, différents résonateurs à ondes de volume à films minces piézoélectriques ont été mis au point : les résonateurs à film mince sur substrat (TFR : *« Thin Film Resonator* »), usinés en surface ou dans le volume (FBAR : *« Film Bulk Acoustic Resonator* », HBAR : *« Harmonic Bulk Acoustic Resonator* »), ou à miroir de Bragg (SMR : « *Solidely Mounted Resonator* »). Pour une telle structure résonante hybride comprenant un film piézoélectrique, le couplage entre l'énergie électrique et le milieu piézoélectrique est maximal si le maximum de contrainte est appliqué au milieu de la couche piézoélectrique. De fait, le couplage électromécanique, les effets de température et de contraintes ainsi que l'isolation acoustique du résonateur sont des phénomènes non couplés au premier ordre, et à ce titre considérés généralement comme indépendants : la relation entre de tels phénomènes n'est pas triviale.

Ces structures résonantes hybrides ont pour avantage par rapport aux capteurs à ondes de surface qu'ils possèdent un encombrement très inférieur ; en particulier, les modes de réalisation selon l'invention présentés plus loin peuvent être de l'ordre de 200 µm × 200 µm. Par ailleurs, il est possible d'enrober à bas coût le capteur et sa connexion avec l'antenne, afin d'avoir une structure qui peut être intégrée directement dans la gomme avant la vulcanisation du pneumatique, sans encapsulation complexe du système.

De façon basique et tel qu'illustré sur la figure 2, un résonateur 10 hybride comprend une lame 12 d'un matériau faisant office de substrat. Sur la lame de substrat 12 est disposé un transducteur piézoélectrique 14. Le transducteur 14 comprend une première électrode 16, déposée à la surface de la lame 12 ; avantageusement, l'épaisseur de la couche composant la première électrode 16 est inférieure à λ₁₆/20, avec λ₁₆ la longueur d'onde de l'onde acoustique se propageant à l'intérieur de la couche. La première électrode 16 est constituée par un matériau de préférence bon conducteur électrique afin de limiter les pertes ohmiques ; avantageusement il s'agit d'un métal (Al, Mo, Ni, Ag, Pt, Au, W, Cu,...), choisi de sorte qu'il est susceptible, si possible, de se déposer de façon orientée à la surface du substrat 12.

En effet, le transducteur 14 comprend une couche de matériau piézoélectrique 18 mise en place au dessus de la première électrode 16 ; le procédé de mise en place, qui dépend de la nature du matériau piézoélectrique, est choisi pour minimiser les défauts de texture de la couche 18 qui constituent des sources de dissipation néfastes au confinement de l'énergie acousto-électrique dans l'épaisseur de la structure 10. On peut ainsi déposer du niobate de lithium, du niobate de potassium, du nitrure d'aluminium, de l'oxyde de zinc, et d'autres matériaux piézoélectriques. L'épaisseur du film influe sur le taux de couplage (tel qu'expliqué plus loin) ; de préférence, pour une longueur d'onde acoustique λ₁₈ au sein de la couche piézoélectrique 18, le couplage optimal est obtenu pour une épaisseur de la couche égale à λ₁₈/2 ou à tout multiple impair de λ₁₈/2.

Une contre électrode 20 est ensuite déposée à la surface du matériau piézoélectrique 18. Comme dans le cas de la première électrode 16, cette deuxième électrode 20 est constituée par un matériau de préférence bon conducteur électrique, avantageusement un métal susceptible de se déposer de façon orientée, ou mieux épitaxiée. De même, avantageusement, l'épaisseur de la couche d'électrode 20 est inférieure à λ₂₀/20, avec λ₂₀ la longueur d'onde de l'onde acoustique se propageant à l'intérieur du matériau de l'électrode 20.

La principale difficulté technologique de réalisation d'un tel composant 10 réside dans l'élimination ou l'amincissement local du substrat 12 situé sur la face arrière de la couche piézoélectrique 14 afin de permettre à la vibration de s'établir librement : le substrat 12 subsistant sous la membrane piézoélectrique 18 apparaît comme susceptible d'engendrer des modes parasites, car la fréquence propre F₀, et la fréquence de fonctionnement F, du résonateur 10 dépendent directement de l'épaisseur du substrat 12. L'amincissement du substrat 12 pour le mettre à épaisseur peut être réalisé préalablement ou au cours du procédé de fabrication du résonateur 10 ; il est également possible de modifier l'épaisseur du substrat 12 une fois le résonateur 10 fabriqué, par exemple en mettant à profit l'opération pour réaliser un ajustage de la fréquence de résonance du dispositif 10.

Cette structure 10, dite résonante hybride, présente une multiplicité de modes correspondant aux harmoniques possibles du mode fondamental de la structure. Il devient ainsi possible de changer de bande de fréquence radio plus facilement qu'avec les structures SAW de type résonateurs, ce qui augmente d'autant les fréquences de fonctionnement F₀ du dispositif, et donc diminue sa taille.

De fait, une structure 10 telle qu'illustrée en figure 2 résonne naturellement à des fréquences très hautes ou très basses, ce qui pénalisait son utilisation en tant que transpondeur radiofréquence, c'est-à-dire de préférence dans la gamme des 300 MHz - 3 GHz. Grâce à l'utilisation composite, il est possible d'adapter la fréquence de fonctionnement du résonateur 10 par le choix d'un mode correspondant à la gamme souhaitée, en utilisant un mode non fondamental de résonance, mais plutôt une harmonique de rang N ≠ 1.

La fréquence propre F₀ de résonance d'une telle structure 10 est donnée par la relation F₀ = V/2e avec e l'épaisseur effective de la plaque composite couche mince 14 / substrat 12 et V la vitesse équivalente du mode, qui dépend principalement des propriétés élastiques du substrat 12 (de préférence un monocristal) légèrement perturbées par le film 18. Le choix des épaisseurs des différentes couches, et notamment de la lame monocristalline 12, est effectué pour que l'une des résonances harmoniques de rang N de l'empilement corresponde à la fréquence recherchée de fonctionnement F du résonateur 10 ; de plus, un dimensionnement de la structure permet d'obtenir un écart spectral entre deux résonances très supérieur à la bande de fréquence de travail (par exemple 1,8 MHz pour la bande centrée en 433,92 MHz). Ainsi, la résonance choisie peut être sélectionnée avec précision.

Avantageusement, le substrat 12 est fabriqué dans un matériau possédant des facteurs de qualité mécanique et diélectrique les plus élevés possibles, permettant d'atteindre ainsi un produit facteur de qualité x fréquence de résonance (QF) du mode utile supérieur à 3·10¹², par exemple un coefficient de qualité de la résonance du mode utile supérieur à 8000 au voisinage de 400 MHz, En effet, pour la mesure, une bonne qualité de résonance est souhaitable, ce qui est relié au facteur de qualité Q. Ce facteur Q est de l'ordre de 8500 à 10000 à 433 MHz pour un SAW, et il est donc possible d'obtenir un résultat comparable avec une structure selon l'invention. A titre d'exemple, le matériau peut être choisi parmi : le quartz cristallin ou monocristallin, le verre ou la silice amorphe, la langasite La₃Ga₅SiO₁₄ et ses variantes (langanite La₃Ga_{5,5}Nb_{0,5}O₁₄, langatate La₃Ga_{5,5}Ta_{0,5}O₁₄, etc.), le phosphate de gallium, le saphir, le niobate de lithium, le tantalate de lithium, le carbone diamant, le carbure de silicium,...

La polarisation quant à elle est fixée par les couplages piézoélectriques du film 18. Par ailleurs, la conversion de l'énergie mécanique en énergie électrique dépend du couplage entre les matériaux. De préférence, les caractéristiques du matériau piézoélectrique 18 permettent d'atteindre, pour le résonateur composite 10 dans le mode de fonctionnement F retenu, un couplage électromécanique supérieur ou égal à celui des ondes de surface sur quartz en coupes (ST, X), soit 1 ‰ usuellement. Avantageusement, des matériaux à fort coefficient de couplage sont utilisés, comme le nitrure d'aluminium (AlN) ou l'oxyde de zinc (ZnO) qui sont raisonnablement simples à mettre en oeuvre par différentes méthodes, en particulier sur silicium. Le choix de l'épaisseur varie en fonction de la nature de la couche piézoélectrique 18, des applications, et des limites technologiques de réalisation.

La structure 10 est de type « HBAR », où l'énergie est répartie de façon à peu près homogène entre la couche piézoélectrique 18 et le substrat 12. Ces structures 10 sont caractérisées par une résonance sur harmonique de l'ensemble substrat 12 / couche piézoélectrique 18, avec une épaisseur totale active d'au moins une longueur d'onde. L'énergie acoustique n'est pas confinée dans la couche piézoélectrique 18, mais au contraire est largement présente dans le substrat 12. A l'inverse, dans une structure de type « FBAR », l'énergie acoustique est naturellement confinée dans la couche piézoélectrique 18, et la structure est caractérisée par une résonance en mode fondamental de la couche piézoélectrique 18 (une demi-longueur d'onde ou proche).

Comme, tel que mentionné plus haut, pour une structure résonante composite 10 comprenant un film piézoélectrique 18, le couplage entre l'énergie électrique et le milieu piézoélectrique est maximal si le maximum de contrainte est appliqué au milieu de la couche piézoélectrique, il est possible d'épaissir la couche supérieure 20 afin de déplacer, par effet de propagation, la position du ventre de dilatation au sein de la couche piézoélectrique 18.

Cependant, pour éviter de se trouver confronté à la dégradation importante du coefficient de surtension de la structure résonante 10, il est préférable que l'énergie élastique puisse se propager au sein d'une couche additionnelle d'épaississement 22 rapportée sur l'électrode 20. Un facteur de couplage de 5 ‰ peut ainsi être obtenu. Selon l'invention, l'empilement 12, 16, 18, 20 est donc de préférence complété par une couche additionnelle 22 déposée à la surface de la contre électrode 20. Cet élément additionnel 22 est composé d'un ou plusieurs matériaux, choisis avec des facteurs de qualité mécanique et/ou diélectrique élevés, afin de limiter les pertes intrinsèques du dispositif 10. Avantageusement, selon la nature de la contre électrode 20, la couche 22 peut être réalisée par épitaxie, pour garantir ainsi son orientation.

La couche 22 permet de concentrer l'énergie acousto-électrique du mode utile dans la couche piézoélectrique 18 ; il s'agit, à la limite, d'un élément d'adaptation d'impédance globale du dispositif 10. Avantageusement, la croissance de la couche additionnelle 22 est telle que cette couche 22 présente une texture permettant d'obtenir des valeurs de surtension suffisantes pour limiter les pertes intrinsèques du dispositif 10. En particulier, pour une structure résonante 10 de type HBAR, cette couche additionnelle 22 est telle que l'énergie n'est pas confinée dans la couche piézoélectrique 18 bien que significativement présente, en positionnant le ventre de contrainte dans cette couche 18.

De fait, on ne peut pas considérer l'addition d'une couche additionnelle comme évidente pour l'homme de l'art puisqu'aucune des réalisations de HBAR publiées ne comporte cette couche additionnelle qui permet de déplacer le ventre de contrainte.

Le matériau de la couche 22 est de préférence choisi parmi les matériaux utilisés pour réaliser le substrat 12, en particulier le quartz monocristallin, un verre ou de la silice amorphe, la langasite et ses variantes (langanite, langatate, etc.), le phosphate de gallium, le saphir, le niobate de lithium, le tantalate de lithium, le carbone diamant, le carbure de silicium,... La couche additionnelle 22 peut ou non avoir des propriétés piézoélectriques ; elle peut aussi comprendre du nitrure d'aluminium ou du niobate de potassium.

Le choix des épaisseurs des différentes couches et notamment de la lame 12 est calculé pour que l'une des résonances harmoniques de rang N (N ≥ 1) de l'empilement 14, 22 corresponde à la fréquence F de fonctionnement de la structure résonante 10.

Les éléments constitutifs sont choisis de sorte que la sensibilité à la contrainte soit la plus élevée possible, pour permettre, après intégration dans un système déformable spécifique, la mesure des effets de contraintes induites par la déformation du corps au sein duquel elle se trouve.

Le résonateur selon l'invention est muni de deux miroir de Bragg au moins. Une structure résonante 24, illustrée en figure 3, comprend ainsi un miroir de Bragg 26 sur la face inférieure du transducteur 14, entre un substrat 12 et la première électrode 16, qui permet entre autres de provoquer une rupture d'impédance, et un miroir de Bragg 28 sur la face supérieure de la couche supplémentaire 22 destinée à concentrer l'énergie.

Tel qu'il est usuel, chaque miroir de Bragg 26, 28 est composé d'une alternance de couches de matériaux d'indices de réflexion différents dont l'épaisseur est un multiple impair de λ/4, avec λ longueur d'onde de l'onde qui se propage à l'intérieur du réseau 26, 28 : les réflexions successives sur les diverses couches créent l'effet de miroir ; par exemple, les empilements sont constitués par l'alternance de couches de Si et de SiₓN_{y}. Le coefficient de réflexion de chaque miroir 26, 28 est avantageusement choisi pour être maximal au voisinage de la fréquence de résonance de la structure 24.

La structure des couches utilisées pour réaliser chaque miroir 26, 28 est choisie pour réaliser une bande d'arrêt (c'est-à-dire le domaine spectral dans lequel le miroir accomplit sa fonction de réflexion totale des ondes) centrée autour d'une résonance harmonique, elle-même choisie pour ses qualités propres de couplage, de coefficient de qualité, de sensibilité thermique, etc.. Il peut également être intéressant, afin d'améliorer la pureté spectrale du résonateur 24, de réaliser une bande d'arrêt d'un miroir 26 de façon à ce que la largeur de bande soit inférieure à l'écart entre deux harmoniques de la structure résonante 24.

En présence d'un double miroir 26, 28, il est possible de jouer sur la structure respective de chacun des miroirs de façon à ce que leur réponse spectrale soit légèrement décalée : la fonction de filtrage est ainsi élargie par rapport à une configuration à un seul miroir ou à deux miroirs symétriques. Avantageusement, le miroir avant 28 est décalé de sorte que la fréquence de résonance choisie soit dans la partie basse de la bande d'arrêt et le miroir arrière 26 est tel que la fréquence de résonance se situe dans la partie haute de la bande d'arrêt, ou réciproquement.

En particulier dans le cas où une intégration dans le pneumatique est envisagée, mais également pour toute autre utilisation il est envisageable d'inclure une face ou l'ensemble de la structure 24 selon l'invention dans un matériau d'enrobage ; selon les applications, cet enrobage pourra faire office d'encapsulation. Un absorbant acoustique, par exemple une couche de matériau organique, comme un polymère, notamment à base de résine époxy, peut ainsi être déposé à la surface d'au moins un miroir de Bragg 26, 28, ce qui permet d'éliminer la contribution des modes non réfléchis par le miroir à la réponse électrique du résonateur 24 ; il est souhaitable que le matériau d'enrobage soit compatible avec la gomme d'un pneumatique de sorte que, lors de la vulcanisation, la structure selon l'invention soit totalement intégrée au pneumatique, par exemple une résine Epoxy E514 (Epotechny™).

Il apparaît ainsi que le résonateur hybride selon l'invention permet d'obtenir des rendements, ou couplages, supérieurs aux structures SAW, tout en ayant des qualités de résonance importantes et un encombrement réduit. Les pertes d'énergie avec le capteur sont donc minimisées, ce qui est avantageux et augmente la fiabilité, tout en élargissant les champs d'application de ce type de système passif vers le pneumatique et la liaison au sol. En outre, la fabrication des structures résonantes hybrides fait appel aux technologies de la microélectronique, notamment avec des procédés de dépôts sur tranche, ou « *wafer* », dont le matériau de base peut être le silicium, au coût largement inférieur à celui du quartz utilisé pour les SAW.

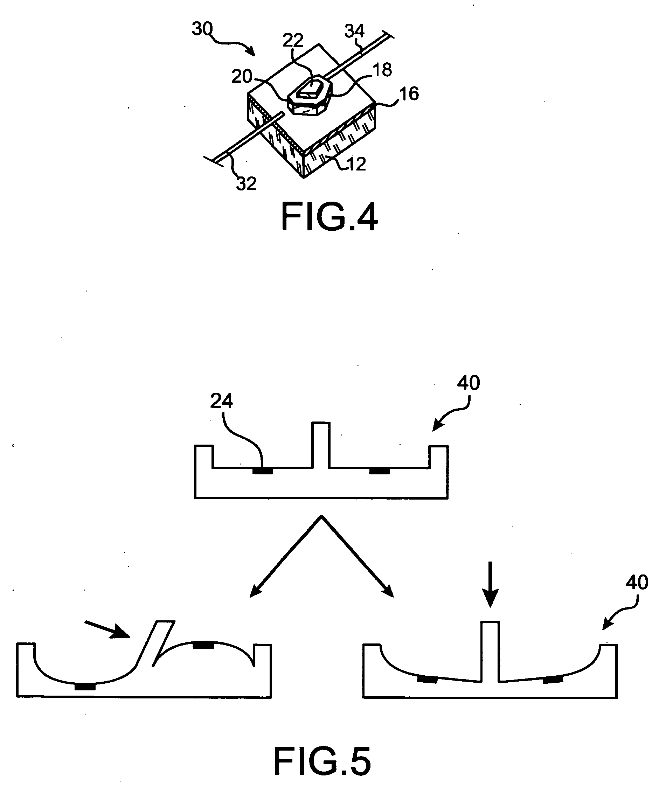

Dans un mode de réalisation préféré, le résonateur selon l'invention peut être utilisé comme transpondeur 30, tel qu'illustré sur la figure 4. Un résonateur 10 est muni d'une antenne, ici de type dipolaire, à deux brins 32, 34, qui lui est raccordée : il est alors possible d'exciter la résonance électrique de la structure 10 en la plaçant dans le champ d'un émetteur fonctionnant dans la gamme de fréquences correspondante. Après excitation, la fréquence propre de la structure 12, 16, 18, 20, 22 sera réémise et pourra être analysée en utilisant un dispositif approprié. Il est ainsi possible de réaliser un transpondeur 30 dont le signal est asservi à l'état de la structure au moment de la réception. Un autre avantage est qu'il apparaît ici possible de régler le module de l'impédance de résonance indépendamment des autres caractéristiques électriques telles que le couplage, la dérive thermique, etc.. Il est alors plus facile d'optimiser les échanges d'énergie avec l'antenne qui lui est connectée, en jouant sur le rapport d'onde stationnaire SWR (« *Standing Wave Ratio* »).

En outre, lorsque l'invention est utilisée comme transpondeur passif, qu'il soit partiel ou total, un enrobage peut laisser passer ou inclure les fils d'antenne. L'absence d'encapsulation spécifique, l'intégration de la liaison électromécanique entre l'antenne et le capteur, l'absorbant au sein de l'enrobage permettent une forte réduction du coût final du transpondeur.

Un résonateur hybride 10, 24, 30 selon l'invention permet ainsi, qu'il soit intégré dans la gomme du pneumatique ou collé à un élément de la liaison au sol, de mesurer la température de roulage. En particulier, la structure résonante 10, 24 selon l'invention peut être réalisée en utilisant un ensemble de matériaux qui accroissent sa sensibilité aux variations de température. Par exemple, on utilise de préférence des matériaux dont les coefficients de variation de la fréquence en fonction de la température (CFT) sont de même signe, de façon à cumuler les effets, comme par exemple le niobate de lithium et le silicium, tous deux à CFT négatif.

Dans un autre cas de figure, pour limiter la sensibilité aux variations de température, par exemple lorsque la bande de fréquence disponible pour l'interrogation est faible, deux matériaux dont les CTF sont contra variants, comme AIN et Si, peuvent être utilisés. Ici, la fréquence de résonance de l'ensemble de la structure 10 varie alors en fonction de la température, et il est possible d'utiliser la fonction de transpondeur 30 par exemple pour suivre directement l'évolution des variations de température.

Un tel transpondeur 30 peut être associé à un autre résonateur 10, 24 selon l'invention. Dans ce cas, avantageusement, l'écart entre les couplages et les impédances à la résonance des structures résonantes est minimisé afin de limiter le différentiel de pertes, et donc permettre leur interrogation respective à distance avec les mêmes performances, notamment en termes de distance d'interrogation. Ainsi, la réponse à une interrogation est homogène en termes de niveau de réponse entre les différents résonateurs à même distance d'interrogation.

Avantageusement, deux structures résonantes 10 sont utilisées conjointement de façon à ce que les fréquences des structures résonantes présentent des dérives opposées en fonction de la température, ce qui permet de doubler la sensibilité de l'ensemble ainsi créé. En particulier, la sensibilité de la mesure électrique peut être optimisée en plaçant le résonateur à dérive thermique positive de la fréquence en entrée de la bande de fréquence autorisée, et celui à dérive thermique négative de la fréquence en sortie de ladite bande. Pour chaque résonateur séparément, on détermine l'écart entre sa fréquence de base et sa fréquence courante, et la somme des écarts mesurés pour chaque résonateur pour une même variation de température équivaut à une dérive thermique double de la valeur unitaire.

Inversement, si l'ensemble des matériaux choisis est tel que la sensibilité en température de la fréquence de résonance utile (dans la bande d'interrogation choisie) est la plus faible possible, la structure résonante peut ensuite être intégrée dans une structure mécanique déformable spécifique pour une mesure directe des effets de contrainte : la déformation de la structure mécanique entraîne une modification des propriétés acoustiques du résonateur, ce qui se traduit par une variation de sa (ses) fréquence(s) de résonance. La structure mécanique déformable peut être sous forme d'une barre rigide connectée à une membrane déformable dont l'épaisseur est ajustée pour optimiser la gamme de contraintes à mesurer et la résonance utile, représentative de l'information recherchée.

Le résonateur selon l'invention permet ainsi la mesure indirecte de la pression des pneumatiques (ou autre contrainte tridimensionnelle) en utilisant plusieurs structures hybrides comme jauges de contrainte sur un MEMS en silicium, grâce à leur compatibilité : ici encore, il est possible d'intégrer le dispositif selon l'invention pendant le procédé de fabrication du MEMS du fait du faible encombrement et du matériau de base qui est courant. Par exemple, il est possible de rendre un capteur clou 40 tel qu'illustré dans EP 1 275 949 passif : les jauges de contraintes piézorésistives gravées sur le MEMS 40 peuvent être remplacées par des jauges de contrainte de type structures hybrides résonantes 24, tel qu'illustré sur la figure 5, ce qui est possible au vu de la taille réduite des dispositifs selon l'invention.

Il est possible par ailleurs de disposer plusieurs structures résonantes selon l'invention sur la même structure mécanique déformable, en particulier un pneumatique, certaines étant disposées sur les parties sensibles à la contrainte et d'autres sur des parties non affectées par les contraintes ou sur une fibre neutre pour permettre de disposer d'une référence. La mesure de l'évolution de chaque fréquence par rapport à la référence fixe permet alors, d'une part d'isoler la dérive thermique résiduelle, et d'autre part de mesurer les effets de contraintes ; on peut également remonter au sens (signe) des effets à mesurer. De la même manière, pour s'affranchir de la mesure de température, il est possible d'utiliser une référence qui présente une sensibilité thermique égale à celle du corps d'épreuve, de telle sorte que l'écart fréquentiel entre résonateur de référence et résonateurs de mesure soit constant quelle que soit la température de travail.

Selon une autre utilisation, la structure résonante selon l'invention peut être couplée en série à un corps d'épreuve capacitif dont la valeur varie en fonction d'un paramètre physique à mesurer : la fréquence de résonance varie en fonction de la valeur de la capacité. L'ensemble des éléments constitutifs de la structure résonante est choisi de sorte que la sensibilité de la fréquence de résonance utile (dans la bande d'interrogation choisie) soit la plus faible possible, et la géométrie sélectionnée pour optimiser le couplage électromécanique afin d'effectuer une mesure de capacité par tirage de fréquence. L'interrogation se fait alors en utilisant la fonction de transpondeur de la structure résonante pour suivre directement l'évolution des variations de capacité. Avantageusement, la structure résonante a une capacité statique dont la valeur est proche de la capacité à caractériser.

Pour optimiser la sensibilité, la structure est conçue dans ce cas de façon à ce que la capacité statique du résonateur soit sensiblement égale à la capacité typique du corps d'épreuve capacitif. Pour améliorer encore la sensibilité, il est possible d'utiliser un ensemble d'au moins deux structures résonantes dont une seule est couplée au corps d'épreuve, l'autre étant utilisée comme référence. Il est également possible d'exploiter l'invention en couplant le corps d'épreuve capacitif en parallèle.

En particulier, les résonateurs selon l'invention présentent : une surtension importante de façon à déterminer la fréquence et sa variation avec une précision suffisante ; des pertes d'insertion très faibles de façon à ne pas dissiper inutilement l'énergie reçue lors de la transduction; une robustesse aux conditions environnementales hostiles dans lesquels ils sont susceptibles d'être soumis soit lors de leur mise en place, soit lors de leur exploitation, par exemple avec une température entre -50°C et 500°C.

## Revendications

1. Élément de liaison au sol d'un véhicule comportant, en tant que capteur, au moins une structure résonante acoustique hybride (10, 24) comprenant un support (12) et un transducteur piézoélectrique (14) qui comprend une première électrode conductrice (16) mise en place sur le support (12, 26) et une deuxième électrode conductrice séparées par un film de matériau piézoélectrique (18), une fréquence de travail (F) de la structure (10) étant dans le spectre radiofréquence, notamment de 300 à 3000 MHz,
**caractérisé en ce que** la structure résonante acoustique hybride comporte en outre une couche additionnelle (22) mise en place à la surface de la deuxième électrode (20) opposée au film de matériau piézoélectrique (18) qui permet d'optimiser la densité acousto-optique au sein du film piézoélectrique (18) en positionnant un ventre de contrainte à la fréquence de travail dans le film de matériau piézoélectrique (18), un miroir de Bragg (28) positionné sur la couche additionnelle (22) et un miroir de Bragg (26) sur la face inférieure du transducteur piézoélectrique (14), entre le support (12) et la première electrode conductrice (16), et **en ce que** la fréquence de travail (F) de la structure résonante (10, 24), dans le spectre radiofréquence, est une harmonique de rang N ≠ 1 de la fréquence propre (F₀) de la structure (10).

2. Élément de liaison au sol selon la revendication 1, dans lequel le support (12) de la structure résonante (10) est sous forme d'une lame de substrat, en particulier un monocristal de silicium.

3. Élément de liaison au sol selon l'une des revendications précédentes, dans lequel la couche de matériau piézoélectrique (18) est une couche mince de nitrure d'aluminium.

4. Élément de liaison au sol selon l'une des revendications 1 à 3, dans lequel la couche additionnelle (22) est de même nature que le support (12).

5. Élément de liaison au sol selon l'une des revendications précédentes, dans lequel chaque miroir de Bragg (26, 28) est composé d'une alternance de couches de coefficients de réflexion différents et dont le coefficient de réflexion est maximal au voisinage de la fréquence de résonance (F) de la structure acoustique (24).

6. Élément de liaison au sol selon l'une des revendications précédentes, dans lequel la structure résonante (10, 24) comprend en outre une couche d'enrobage de la structure au niveau d'un miroir de Bragg (26, 28) au moins.

7. Élément de liaison au sol selon l'une des revendications précédentes, comprenant en outre une antenne (32, 34) associée à la structure résonante (10, 24).

8. Élément de liaison au sol selon la revendication 7, dans lequel lorsqu'au moins une seconde structure acoustique résonante est présente, les caractéristiques de chaque structure résonante permettant une mesure différentielle de température.

9. Élément de liaison au sol selon l'une des revendications précédentes, **caractérisé en ce que** c'est un pneumatique dans la gomme duquel est intégrée la structure résonante (10,24).

10. Élément de liaison au sol selon l'une des revendications précédentes, dans lequel la structure résonante (10, 24) sert à mesurer un paramètre de roulage du véhicule.

11. Élément de liaison au sol selon la revendication 10, dans lequel le paramètre de roulage est la température d'un pneumatique.

## Patentansprüche

1. Bodenverbindungselement eines Fahrzeugs, das als Sensor mindestens eine hybride akustische Resonanzstruktur (10, 24) aufweist, die einen Träger (12) und einen piezoelektrischen Wandler (14) enthält, der eine erste leitende Elektrode (16), die auf dem Träger (12, 26) angeordnet ist, und eine zweite leitende Elektrode enthält, die durch eine Folie aus piezoelektrischem Material (18) getrennt sind, wobei eine Arbeitsfrequenz (F) der Struktur im Hochfrequenzspektrum liegt, insbesondere zwischen 300 und 3000 MHz,
**dadurch gekennzeichnet, dass** die hybride akustische Resonanzstruktur außerdem eine auf der Fläche der zweiten Elektrode (20) entgegengesetzt zur Folie aus piezoelektrischem Material (18) angeordnete zusätzliche Schicht (22), die es ermöglicht, die akusto-optische Dichte innerhalb der piezoelektrischen Folie (18) zu optimieren, indem ein Spannungsbauch auf der Arbeitsfrequenz in der Folie aus piezoelektrischem Material (18) positioniert wird, einen auf der zusätzlichen Schicht (22) positionierten Bragg-Spiegel (28) und einen Bragg-Spiegel (26) an der Unterseite des piezoelektrischen Wandlers (14) zwischen dem Träger (12) und der ersten leitenden Elektrode (16) aufweist, und dass die Arbeitsfrequenz (F) der Resonanzstruktur (10, 24) im Hochfrequenzspektrum eine Harmonische des Rangs N ≠ 1 der Eigenfrequenz (F₀) der Struktur (10) ist.

2. Bodenverbindungselement nach Anspruch 1, wobei der Träger (12) der Resonanzstruktur (10) in Form einer Substratlamelle vorliegt, insbesondere eines Silicium-Monokristalls.

3. Bodenverbindungselement nach einem der vorhergehenden Ansprüche, wobei die Schicht aus piezoelektrischem Material (18) eine dünne Schicht aus Aluminium-Nitrid ist.

4. Bodenverbindungselement nach einem der Ansprüche 1 bis 3, wobei die zusätzliche Schicht (22) von der gleichen Beschaffenheit ist wie der Träger (12).

5. Bodenverbindungselement nach einem der vorhergehenden Ansprüche, wobei jeder Bragg-Spiegel (26, 28) aus einer Wechselfolge von Schichten unterschiedlicher Reflexionskoeffizienten zusammengesetzt ist, wobei der Reflexionskoeffizient in der Nähe der Resonanzfrequenz (F) der akustischen Struktur (24) maximal ist.

6. Bodenverbindungselement nach einem der vorhergehenden Ansprüche, wobei die Resonanzstruktur (10, 24) zumindest im Bereich eines Bragg-Spiegels (26, 28) außerdem eine Umhüllungsschicht der Struktur enthält.

7. Bodenverbindungselement nach einem der vorhergehenden Ansprüche, das weiter eine der Resonanzstruktur (10, 24) zugeordnete Antenne (32, 34) enthält.

8. Bodenverbindungselement nach Anspruch 7, wobei, wenn mindestens eine zweite akustische Resonanzstruktur vorhanden ist, die Eigenschaften jeder Resonanzstruktur eine differentielle Temperaturmessung erlauben.

9. Bodenverbindungselement nach einem der vorhergehenden Ansprüche, **dadurch gekennzeichnet, dass** es ein Luftreifen ist, in dessen Gummi die Resonanzstruktur (10, 24) integriert ist.

10. Bodenverbindungselement nach einem der vorhergehenden Ansprüche, wobei die Resonanzstruktur (10, 24) dazu dient, einen Rollparameter des Fahrzeugs zu messen.

11. Bodenverbindungselement nach Anspruch 10, wobei der Rollparameter die Temperatur eines Luftreifens ist.

## Claims

1. An element of a vehicle-to-ground connection, comprising at least one hybrid resonant acoustic structure (10, 24) acting as a sensor, including a support (12) and a piezoelectric transducer (14) that comprises a first conducting electrode (16) supported by the support (12, 26) and a second conducting electrode, a film of piezoelectric material (18) separating the two electrodes, a working frequency (F) of the resonant acoustic structure (10) being in the radiofrequency spectrum notably from about 300 MHz to about 3000 MHz,
**characterized in that** the hybrid resonant acoustic structure further comprises an additional layer (22) installed on the surface of the second electrode opposite the film of piezoelectric material (18), the additional layer optimizes the acousto-electric density within the piezoelectric film by positioning a strain maximum at the working frequency in the piezoelectric layer material, a Bragg mirror (28) positioned on the additional layer (22) and a Bragg mirror (26) on the inferior face of the piezoelectric transducer (14), between the support (12) and the first conducting electrode (16), and **in that** the working frequency (F) of the resonant structure (10, 24), in the radiofrequency spectrum is an harmonic with rank N ≠ 1 of the natural frequency (F₀) of the resonant structure (10, 24).

2. Element of the vehicle-to-ground connection according to claim 1, wherein the support (12) of the resonant structure (10) is a silicon monocrystal substrate blade.

3. Element of the vehicle-to-ground connection according to one of the previous claims, wherein the film of piezoelectric material (18) is a thin aluminium nitride layer.

4. Element of the vehicle-to-ground connection according to one of claims 1 to 3, wherein the additional layer (22) is formed of a same material as the support (12).

5. Element of the vehicle-to-ground connection according to one of the previous claims, wherein each Bragg mirror includes an alternation of layers of materials with different reflection coefficients, and wherein a reflection coefficient of each Bragg mirror is maximum close to the resonant frequency (F) of the resonant acoustic structure (24).

6. Element of the vehicle-to-ground connection according to one of the previous claims, wherein the resonant acoustic structure further includes a coating layer on at least one of the Bragg mirror.

7. Element of the vehicle-to-ground connection according to one of the previous claims, further comprising an antenna (32, 34) connected to the resonant acoustic structure (10, 24).

8. Element of the vehicle-to-ground connection according to claim 7, further comprising at least one other resonant acoustic structure, wherein the characteristics of each resonant acoustic structure enable differential measurement of a temperature.

9. Element of the vehicle-to-ground connection according to one of the previous claims, wherein the resonant acoustic structure is integrated in the rubber of a tyre.

10. Element of the vehicle-to-ground connection according to one of the previous claims, wherein the resonant acoustic structure is used to measure a running parameter of a vehicle.

11. Element of the vehicle-to-ground connection according to claim 10, wherein the running parameter is a temperature of a tire.
